Europäisches Patentamt

European Patent Office

Office européen des brevets

(11) Publication number: **0 475 297 A2**

# EUROPEAN PATENT APPLICATION

(21) Application number: **91115106.6**

(22) Date of filing: **06.09.91**

(51) Int. Cl.5: **H04B 1/08**, G11B 31/02, H04R 3/00

(30) Priority: **07.09.90 JP 237527/90**

(43) Date of publication of application:
**18.03.92 Bulletin 92/12**

(84) Designated Contracting States:
**DE GB**

(71) Applicant: **MATSUSHITA ELECTRIC INDUSTRIAL CO., LTD**
**1006, Oaza Kadoma, Kadoma-shi**
**Osaka 571(JP)**

(72) Inventor: **Tanaka, Kiichi**
**8-7-608, Chuo 2-chome**
**Joto-ku, Osaka-shi, Osaka(JP)**
Inventor: **Kashima, Koutarou**

**1-2-9, Hinokizaka, Haibara-cho**
**Uda-gun, Nara-ken(JP)**
Inventor: **Nagaysohi, Atsushi**
**1-605, 412-2, Oaza Uchiage**
**Neyagawa-shi, Osaka(JP)**
Inventor: **Higuchi, Koichi**
**1-29-14, Higashi Nakaburi**
**Hirakata-shi, Osaka(JP)**

(74) Representative: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) Remote control apparatus for audio reproduction apparatus.

(57) A remote control actuator (15) for an audio reproduction apparatus such as a pocket-size stereo cassette tape recorder is connected to a main unit (11) of the reproduction apparatus by a multicore connecting cord which is also used to connect earphones. The remote control actuator is provided with a single pushbutton switch (16), and the main unit includes circuits for recognizing specific combinations of actuations of that switch, which are transferred via one of the connecting leads (20a). The remote control actuator includes a display section (18), which responds to display command signals sent from the main unit, to indicate an operating mode of the main unit that has been established by these switch actuations, with these command signals being transferred via the aforementioned connecting lead (20a) which is also used together with one other connecting lead (20b) and a common ground lead (20c) to supply power to the display section, so that no battery is required in the remote control actuator and the number of connecting leads is small.

FIG. 1 PRIOR ART

## BACKGROUND OF THE INVENTION

### 1. Field of the Invention

The present invention relates to a remote control apparatus which is provided at an intermediate position on an earphone cord of an audio reproduction apparatus such as a cassette tape recorder or portable compact disk player.

### 2. Description of the Related Art

At present, various types of extremely compact audio reproduction apparatus are being manufactured. In the case of certain types of such apparatus, and in particular in the case of a pocket-size cassette tape recorder or portable compact disk player, a remote control actuator is commonly provided which is linked to the main unit of the tape recorder via a connecting cord. Various operating functions of the tape recorder can thereby be conveniently controlled by the user through actuations of switches which are provided on the remote control actuator, for example while the main unit of the tape recorder is within a pocket or a handbag.

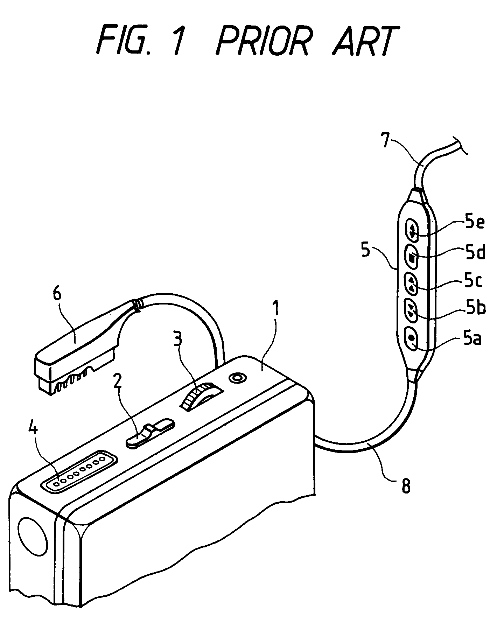

Fig. 1 is a partial oblique view of a cassette tape recorder which is provided with an example of a prior art type of remote control apparatus. In Fig. 1, 1 denotes a tape recorder main unit which is provided with a power switch 2, and operating means including a volume control 3, etc. Numeral 4 denotes a connector socket which mates with a connector plug 6, that is coupled to a remote control actuator 5 by a multicore connecting cord 8. Numeral 7 denotes a connecting cord for earphones (not shown in the drawing).

The remote control actuator 5 is provided with respectively mutually independent operating pushbutton switches 5a, 5b, 5c, 5d and 5e, for respectively controlling "halt", "rapid advance", "rewind", "pause" and "playback" modes of operation of the tape recorder. The multicore connecting cord 8 includes connecting leads for respectively connecting to the various pushbutton switches 5a to 5e, and connecting leads for supplying audio signals to the earphones. The connector plug 6 is provided with a number of pins corresponding to the number of leads within the multicore cable.

With this prior art apparatus, the operation of the tape recorder can be controlled by selectively actuating the operating pushbutton switches 5a to 5e of the remote control actuator 5,

However with such a prior art apparatus, since it is necessary to provide a remote control actuator 5 having a plurality of operating pushbutton switches which are separate from the main unit 1, the remote control actuator 5 is large in scale. To overcome that disadvantage, it has been proposed to perform a number of functions in common by one or more of the pushbutton switches. For example, it is possible to arrange that whereas a single actuation of one of the pushbutton switches results in a certain control operation being performed, a specific number of actuations of that switch (e.g which are executed in rapid succession) will result in a different control operation being performed. In that way it becomes possible to reduce the number of pushbutton switches, and so achieve a reduction in scale of the remote control actuator. However in that case, there is the disadvantage that the user is not provided with any visible confirmation of the operating mode that has been selected by the actuations of the pushbutton switches.

## SUMMARY OF THE INVENTION

It is an objective of the present invention to overcome the problem set out above, by providing a remote control apparatus for an audio reproduction apparatus, whereby it becomes possible to execute substantially all of the control functions of the audio reproduction apparatus by using only a single pushbutton switches of a remote control actuator, and whereby the remote control actuator provides visible confirmation of a selected operating mode.

To overcome the prior art problems, a remote control apparatus for an audio reproduction apparatus according to the present invention includes a remote control actuator which is connected via a connecting cord to a main unit of the audio reproduction apparatus, with that connecting cord also including connecting leads for earphones, the remote control actuator including a single remote control pushbutton switch for controlling a plurality of operating functions of the main unit. In addition, means are provided for in the main unit for recognizing specific combinations of actuations of the pushbutton switch and for controlling the audio reproduction apparatus to operate in respective conditions in accordance with the actuations, and a display section is provided on the remote control actuator, for producing an indication of an operating condition that has been established by the switch actuations, i.e. an operating condition that has been established based upon the recognition results. In addition, with a remote control apparatus according to the present invention, the audio reproduction apparatus main unit is provided with a pushbutton switch actuation confirmation signal generating circuit, whereby audible confirmation is provided of actuations of the remote control pushbutton switch.

According to a first aspect, a remote control apparatus according to the present invention comprises:

a remote control actuator connected to an audio reproduction apparatus via a connecting cord, the connecting cord including connecting leads for earphones;

a single remote control pushbutton switch for controlling a plurality of operating conditions of a main unit of the audio reproduction apparatus, provided in the remote control actuator; and

display means for providing a visible indication of an operating condition which is established as a result of actuations of the pushbutton switch.

According to a second aspect, the main unit of the audio reproduction apparatus is provided with a signal generating circuit for supplying to the remote control actuator a display command signal indicative of an operating condition to which said audio reproduction apparatus has been changed in response to said actuations of the remote control pushbutton switch.

According to a third aspect, the main unit of the audio reproduction apparatus is provided with a signal generating circuit for producing audio signals for providing an audible confirmation of actuations of said remote control pushbutton switch.

According to a fifth aspect, the present invention provides a remote control apparatus comprising:

a connecting cord formed of at least three connecting leads, connected between a main unit of an audio reproduction apparatus and a remote control actuator;

a remote control pushbutton switch for controlling a plurality of operating functions of the audio reproduction apparatus main unit;

a changeover switch operable for controlling a function which is separate from said functions controlled by the pushbutton switch; and

display means for providing a visible indication of an operating condition of the audio reproduction apparatus main unit, which has bean established as a result of actuations of the pushbutton switch, and a visible indication of a status of said function which is controlled by said changeover switch;

wherein of said three connecting leads, a first one of the connecting leads is a ground lead, and second and third ones of the connecting leads serve to supply power to the remote control actuator and to transfer from the remote control actuator to the main unit first information produced by actuations of said pushbutton switch, to transfer from the main unit to the remote control actuator second information consisting of display command signals which designate indications to be produced by said display means, and to transfer from the remote control actuator to the main unit third information which indicates a status of said changeover switch.

With a remote control apparatus according to the present invention, when the pushbutton switch of the remote control actuator is actuated, the actuations are recognized by a circuit in the main unit of the audio reproduction apparatus. Based on the results of that recognition the tape drive mechanism is set into a specific operating mode. At the same time the liquid crystal display section is controlled to provide a visible confirmation of that operating mode.

Furthermore, as a result of recognition of actuations of the pushbutton switch, signals are generated by the confirmation signal generating circuit of the apparatus, whereby audible signals are generated in the earphones in accordance with the actuations.

Moreover, the first, second and third connecting leads of the connecting cord which links the main unit of the audio reproduction apparatus to the remote control actuator serve in combination to continuously supply power to the remote control actuator, while the first and second connecting leads also serve to transmit switch actuation information, so that the number of connecting leads constituting that connecting cord can be substantially reduced by comparison with the prior art.

## BRIEF DESCRIPTION OF THE DRAWINGS

Fig. 1 is a partial oblique view of a tape recorder which is provided with a prior art remote control apparatus.

Fig. 2 is an oblique view of a cassette tape recorder which is provided with an embodiment of a remote control apparatus according to the present invention;

Figs. 3(a) and (b) show an oblique view and a view in elevation of a remote control actuator in the apparatus of Fig. 2;

Fig. 4 is a block diagram showing the electrical configuration of the embodiment;

Figs. 5(a) and (b) are respective waveform diagrams showing signals which are produced under various conditions;

Fig. 6 is a table showing relationships between successive actuations of a pushbutton switch of a remote control actuator of the embodiment, and resultant operating conditions of the tape recorder; and

Fig. 7 is a flow diagram for describing the operation of a display control section in the main body of the tape recorder of the embodiment.

## DESCRIPTION OF PREFERRED EMBODIMENTS

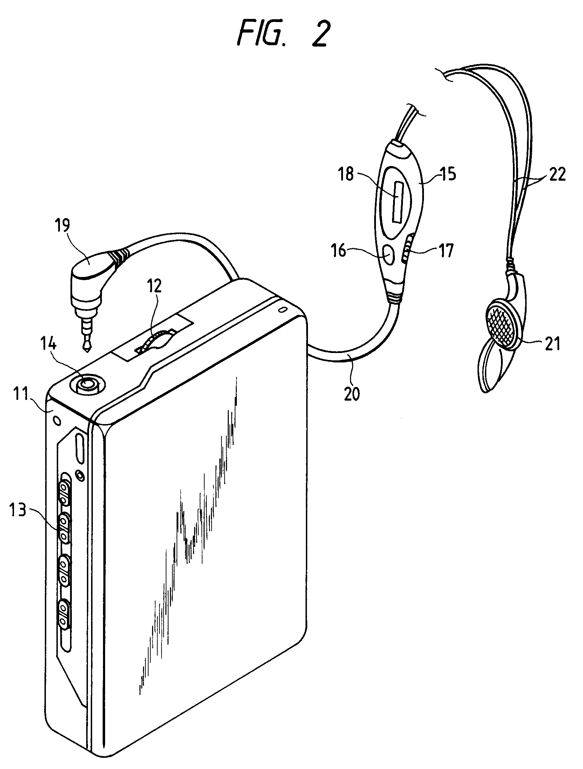

An embodiment of the present invention will be described in the following, which is a remote control actuator that is used with a cassette tape recorder. Fig. 2 is an oblique view of this embodiment, in which 11 denotes the main unit of the tape recorder. The main unit 11 is provided with a volume control 12 and a set of pushbutton switches 13 which can be actuated by the user to select the operating mode of the tape recorder. 14 denotes a 6-way jack which is provided in the main unit 11, 15 denotes a remote control actuator which is provided with a single pushbutton switch 16 for executing changeover of the operating mode of the tape mechanism, 17 denotes a switch used for changing the sound reproduction frequency characteristics and 18 denotes a liquid crystal display section for displaying the operating mode of the tape mechanism. 19 denotes a plug for connecting the remote control actuator 15 and earphones 21 to the main unit 11 via a multicore connecting cord 20 which is formed of six connecting leads. The plug 19 is adapted to couple with the jack 14 of the main unit 11. 21 denotes stereo earphones which are connected to the main unit 11 via the connecting cord 20 and a connecting cord 22 which is an extension of the cord 20, containing only three connecting leads.

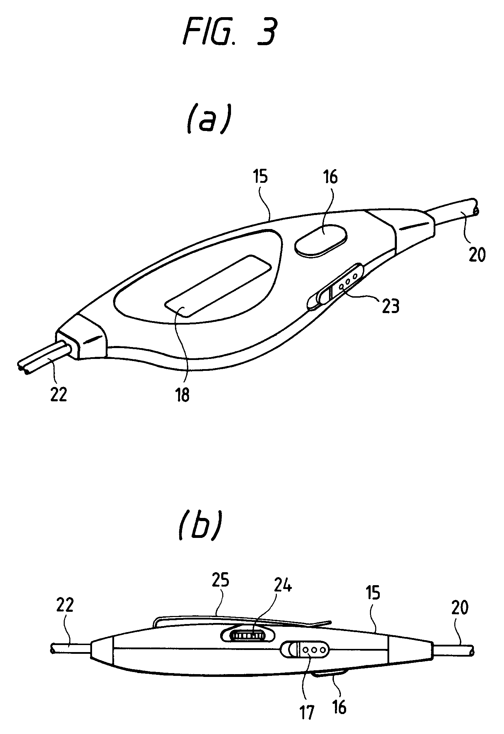

Fig. 3 shows details of the remote control actuator 15. 22 denotes a slider knob, enabling the pushbutton switch 16 to be held in a non-operable condition. 24 denotes a volume control, and 25 denotes a clip for retaining the remote control actuator 15 in a pocket of the user's clothing, etc.

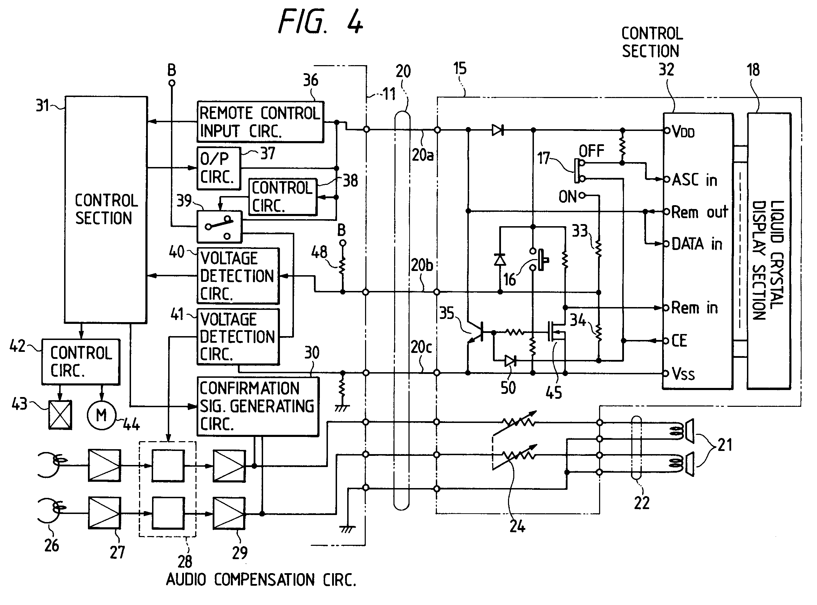

The electrical configuration of the embodiment will now be described referring to the circuit diagram of Fig. 4. Numeral 26 denotes a pair of magnetic heads which contact the magnetic tape, for reproduction of audio signals of two stereophonic channels. 27 denotes a pair of preamplifiers for amplifying the stereo playback audio signals from the heads 26. 28 denotes an audio frequency compensation circuit, for compensating the frequency response of the amplified audio signals. 21 denotes a pair of power amplifiers, for providing power amplification of the compensated audio signals. Two audio signal channels are thereby formed, for stereo reproduction. Numeral 30 denotes an actuation confirmation signal generating circuit, controlled by the control section 31, for generating audio signals to confirm the operating condition of the tape mechanism. In this embodiment, these signals consist of three audio tone burst sequences which are respectively of the form "beep", "beep, beep" and "beep, beep, beep", and which are injected into the right channel of the audio system for respectively indicating that the pushbutton switch 16 has been actuated to cause the forward playback, rapid advance, and rewind conditions to be entered. Similarly, the audio tone burst sequences "beep", "beep, beep" and "beep, beep, beep" are injected into the left channel of the audio system for respectively indicating that the pushbutton switch 16 has been actuated to cause the reverse playback, rapid advance, and rewind conditions to be entered. These audio tone signals are outputted from the earphones after the user has actuated switch 16 to execute a change of the operating mode of the main unit, to thereby provide an audible confirmation to the user that the pushbutton switch 16 has been correctly actuated.

Numeral 32 denotes a control section for receiving display command signals that are sent from the main unit 11 to the remote control actuator 15, and for driving the liquid crystal display section 18 in accordance with the display command signals to provide a display of the operating condition of the tape mechanism. In this embodiment, the control section 32 is implemented as a microprocessor. 33. 34 and 48 denote resistors for use in supplying to the main unit 11, via a connecting lead 20b, respectively different levels of DC voltage in accordance with the state of the changeover switch 17, as described in detail hereinafter. 35 denotes a bipolar transistor which is used to detect an initial actuation of the pushbutton switch 16 after power is applied to the remote control actuator 15. 45 denotes a field effect transistor, which is used in detecting actuations of the pushbutton switch 16 during normal operation of the remote control actuator 15 (i.e. after the aforementioned initial actuation of the pushbutton switch 16 has occurred).

The connecting lead 20c is a common ground lead, which is connected to the 0 V terminal of a 3 V battery which provides power for both the main unit 11 and the remote control actuator 15 and is contained in main unit 11 (not shown in the drawings).

In the main unit 11, 36 denotes a remote control input circuit, for extracting command signals for designating a change in the operating mode of the tape recorder, each transmitted as one or more pulses from the remote control actuator 15 via a connecting lead 20a. 37 denotes an output circuit for display command signals, each transmitted as one or more pulses to the remote control actuator 15 via the connecting lead 20a from the main unit 11. These signals constitute data that are displayed by the liquid crystal display section 18, to indicate the operating condition to which the tape mechanism has been changed. 38 denotes a control circuit which monitors the condition of the connecting lead 20a, and controls the selection by a changeover circuit 39 of one of the connecting leads 20a, 20b to supply the positive power supply voltage (i.e. 3 V, from a battery terminal B) from the main unit 11 to the remote control actuator 15. In the condition of the changeover circuit 39 shown in Fig. 4, the positive power supply voltage is being supplied to the remote control actuator 15 through the connecting lead 20a. 40 denotes a voltage detection circuit for monitoring the potential of the connecting lead 20b, and for thereby detecting whether or not the remote control actuator 15 is in operation. 41 denotes a voltage detection circuit for monitoring the voltage level of the connecting lead 20b, to detect which of two possible DC base voltage levels the connecting lead 20b is set to (as described in detail hereinafter), with these two DC levels being selected in accordance with the changeover switch 17 being set to the ON and OFF states thereof respectively. In accordance with these two different values of DC base voltage levels, the voltage detection circuit 41 controls the frequency compensation circuit 28 to provide two different types of audio signal frequency compensation. It might for example be arranged that the high-frequency response of the audio system is boosted when the changeover switch 17 is set to the ON state.

42 denotes a drive circuit which is controlled by the control section 31, for controlling the magnetic tape drive system of the main unit 11. 43 denotes a solenoid, and 44 denotes a motor which drives the capstan etc., each of which is controlled by outputs produced from the drive circuit 42.

When the user actuates the pushbutton switch 16 in a predetermined manner (as described hereinafter) in order to execute a change of the operating condition of the tape recorder, pulses are thereby generated as a command signal requesting that change, which is supplied from the remote control actuator 15 to the main unit 11 via the connecting lead 20a and the remote control signal input circuit 36. The control section 31 recognizes these command signals, and executes corresponding changes in the control signals which are supplied to the control circuit 42, to thereby implement the required change in the operating condition. In addition, the control section 31 then generates a display command signal in accordance with the new operating condition of the tape recorder, and sends that display command signal via the display command signal output circuit 37 and the connecting lead 20a to the control section 32, whereby a corresponding indication of the new operating condition is displayed by the liquid crystal display section 18.

Alternatively, if while the remote control actuator 15 is connected to the main body 11 the user selectively actuates the pushbutton switches 13 of the main unit of the tape recorder, shown in Fig. 2, to change the operating condition of the tape recorder, then control signals will again be generated by the control section 31 and supplied to the control circuit 42 for thereby implementing that change, and a display command signal will be sent to the remote control actuator 15 to again produce an indication of the new operating condition by the liquid crystal display section 18.

In this embodiment, the control section 31 is implemented as a microprocessor.

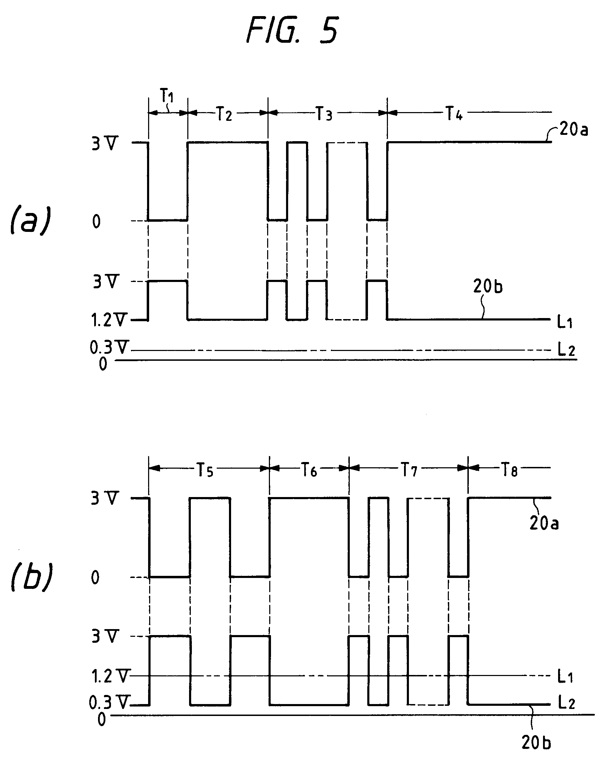

Fig. 5 shows examples of signal waveforms which appear on the connecting leads 20a and 20b. Diagram (a) in Fig. 5 illustrates the process of changeover of the tape mechanism from the halted condition to the forward playback condition, while diagram (b) illustrates the process of changing the operating condition of the tape mechanism from the forward playback state to the (forward) rapid advance state. (There are of course two possible directions of tape movement for playback of an audio tape cassette, with one of these being designated as the forward direction and the other as the reverse direction.)

In Fig. 5, T1 and T5 are intervals in which the pushbutton switch 16 is actuated, while T2 and T6 are intervals in which the control section 31 recognizes these actuations of the pushbutton switch 16, and controls the control circuit 42 to execute tape playback operation. T3 and T7 are intervals in which display command signals for indicating the new tape mechanism operating condition are applied to the connecting lead 20a via the display command signal output circuit 37. T4 is an interval in which the tape mechanism is in the forward playback operating condition, and T8 is an interval in which the tape mechanism is in the rapid advance operating condition. That is to say, prior to the start of the interval T1 of diagram (a), the tape mechanism is in the halted condition. In response to the switch 16 being actuated once, the control section 31 changes the operation of the tape recorder to the forward playback mode. Prior to the interval T5 in diagram (b), the tape mechanism is in the forward playback condition. In response to the switch 16 being actuated twice in rapid succession, the control section 31 changes the operation of the tape recorder to the (forward) rapid advance mode.

The overall operation of the above embodiment will be described in the following. It will be assumed that the tape drive mechanism is initially in the halted state, and the plug 19 has been removed from the jack 14. If the plug 19 connected to the remote control actuator 15 is now inserted into the jack 14 of the main unit 11, thereby interconnecting the remote control actuator 15 and the main unit 11, the 3 V supply voltage of the battery will be transferred through line 20a to the $V_{dd}$ terminal of the control section 32 and the 0 V (ground) battery potential will be applied via the line 20c to the $V_{ss}$ terminal of control section 32. At this stage, the control section 32 (and hence the the display section 18) is not yet set in a normal operating condition, and no indication is being produced by the display section 18. At that time, the output terminal "CE" of the control section 32 is at the 3 V level, so that the diode 50 connected to the base of transistor 35 is reverse-biased. To activate the remote actuator 15, it is necessary for the user to now depress the pushbutton switch 16 of actuator 15, once. As a result, the transistor 35 is set in the conducting state, so that the connecting lead 20a goes almost to ground potential, due to the internal resistance of the battery and of the changeover circuit 39.

The changeover control circuit 38 detects that the potential of the connecting lead 20a has fallen almost to 0 V, and responds by immediately controlling the changeover circuit 39, to connect the 3 V power supply voltage to the connecting lead 20b, to thereby supply the 3 V power supply voltage to the remote control actuator 15 via the connecting lead 20b instead of the lead 20a.

As a result of the change that has occurred in the input voltage level applied to the "DATA in" input terminal of the control section 32, i.e. from 3 V to almost 0 V, internal circuits of the control section 32 are initialized, and the "CE" terminal is set to 0 V. Since the diode 50 has a lower value of forward voltage than the (base-emitter) threshold voltage of the transistor 35, that transistor is thereafter held in an inoperative condition. However (with the switch 16 still in the actuated state, i.e. during the aforementioned initial actuation) due to the fact that the FET 45 is set in the conducting state, the input voltage applied to the "Rem in" terminal of the control section 32 has been lowered to 0 V. As a result, the "Rem out" terminal of the control section 32 pulls down the connecting lead 20a to the 0 V level, and holds the lead at that level for a fixed interval, e.g. the interval T1 in diagram (a) of Fig. 5. Thus, a fixed-duration negative-going pulse appears on the connecting lead 20a as a result of the initial actuation of the pushbutton switch 16. That is to say, at the end of that fixed duration (e.g. T1), the "Rem out" terminal is driven to push the potential of the lead 20a back up to the 3 V level. The control circuit 38 detects this rise in potential of the connecting lead 20a, and responds by controlling the changeover circuit 39 to supply the 3 V battery voltage via the connecting lead 20a, instead of connecting lead 20b.

The pulse that is thereby produced on lead 20b is detected as a command signal by the remote control input circuit 36 of the main body 11, which supplies a corresponding input signal to the control section 31. Since a single input pulse has been supplied, and the tape recorder is currently in the halted condition, the single pulse is recognized by the control section 31 as a command indicating that the operating mode of the tape transport mechanism is to be changed from the halted state to the forward playback mode. The control section 31 then causes the control circuit 42 to control the motor 44 and solenoid 43 to establish the forward playback mode.

A display command signal indicating that this has been done (i.e. the signal of interval T3 in Fig. 4 described above) is then sent from the control section 31 via the output circuit 37 and connecting lead 20a to the "DATA in" terminal of the control section 32.

The contents of that display command signal are then decoded by the control section 32, and corresponding control signals are supplied to the display section 18, which thereby generates liquid crystal display drive signals for producing a display indication to confirm that the tape recorder is now operating in the forward playback mode.

The control section 32 includes a memory function, into which the information conveyed by the display command signal from the main unit 11 is stored, so that drive signals for the liquid crystal display section 18 are thereafter generated on the basis of that stored information. Hence, that display state will be continued until the next time that a display command signal is supplied from the main unit 11 via the display command signal output circuit 37, i.e. until the next time that the operating condition of the tape mechanism is changed,

It can thus be understood that after power has been applied to the remote control actuator 15, it is necessary to initially change the operating mode of the tape recorder, since the display section 18 can only indicate an operating mode of the tape recorder that has been entered from a preceding mode. For that reason, it is necessary with this embodiment for the user to first actuate the pushbutton switch 16 at least once, in order to activate the remote control actuator.

Other features of the above embodiment will now be described. It will be assumed that the initialization operation after power is applied to the remote control actuator 15 has been completed. In that condition, if the user now again actuates the pushbutton switch 16, then the FET 45 will again be set in the conducting state, so that the input voltage applied to the "Rem in" input terminal of the control section 32 will fall to almost 0 V. As a result, the "Rem out" output terminal of the control section 32 will be driven such as to fall to almost 0 V. That is to say, although at this time the 3 V battery voltage is being applied to the "Rem out" terminal, the battery has a certain amount of internal resistance, and the changeover circuit 39 also has some internal resistance. The total of these amounts of internal resistance is substantially higher than the resistance of the drive source within the control section 32 that controls the "Rem out" terminal when the "Rem in" terminal is set to 0 V. Hence, when the pushbutton switch 16 is actuated, the "Rem out" terminal pulls down the voltage on the line 20a to almost 0 V. That condition is instantly detected by the control circuit 38, which responds by immediately causing the changeover circuit 39 to supply the 3 V battery voltage to the connecting lead 20b instead of lead 20a. Thus, a fixed-duration negative-going pulse is generated on line 20a in the same way as described above, which is detected by the input circuit 36 of the main body 11.

As shown in Fig. 5, during each part of the intervals T1 and T5 in which output pulses are applied to the connecting lead 20a as a result of actuations of the pushbutton switch 16, thereby causing the potential of the connecting lead 20a to fall almost to ground potential (i.e. 0 V) or during each part of the intervals T3, T7 in which negative-going pulses constituting a display command signal are sent from the display command signal output circuit 37, thereby similarly causing the potential of the connecting lead 20a go almost to ground potential during each pulse, the voltage of the connecting lead 20b is increased to the positive power supply potential (i.e. 3 V). Thus, whenever the potential of the connecting lead 20a is brought to the ground potential, the positive power supply voltage is supplied to the remote control actuator 15 via the connecting lead 20b, instead of through the connecting lead 20a. The reason for this is that the remote control actuator 15 is provided with the liquid crystal display section 18, which receives a power supply from the main unit 11, and it is necessary to supply power to the liquid crystal display section 18 continuously.

In that way, even when negative-going pulses appear on the connecting lead 20a as signals, no disorder of the display produced by the liquid crystal display section 18 will occur.

During the interval T3 of diagram (a) of Fig. 5, i.e. immediately after a single pulse has been sent to the control section 31 to designate that the control mode is to be changed to the forward drive mode, the control section 31 also controls the switch actuation confirmation signal generating circuit 30 for injecting a single "beep" audio signal into only the right channel of the audio system. A single "beep" tone will thereby be audibly generated in the right channel earphone 21, to indicate that the tape mechanism has been set in the forward playback condition as a result of the single actuation of the pushbutton switch 16 at time T1.

Operation of the tape mechanism is then started, and the playback signals produced from the magnetic heads 26 are transferred via the amplifiers 27, the compensation circuits 28, the output amplifiers 29, connecting cord 20, volume control 24, and cord 20 to the earphones 21, to be outputted in audible form.

When the pushbutton switch 16 is subsequently again depressed once, with the tape recorder in the forward playback condition, that switch actuation will be detected by the transistor 45, and the output from that transistor supplied to the "Rem in" input of the control section 32, as described above, with a corresponding output negative-going pulse being produced from the "Rem out" output to be applied to the connecting lead 20a. In that case, the single pulse that is thereby generated and sent via the connecting lead 20a from the remote control actuator 15 will be recognized by the control section 31 as a command that the tape recorder is to be set in the halted condition.

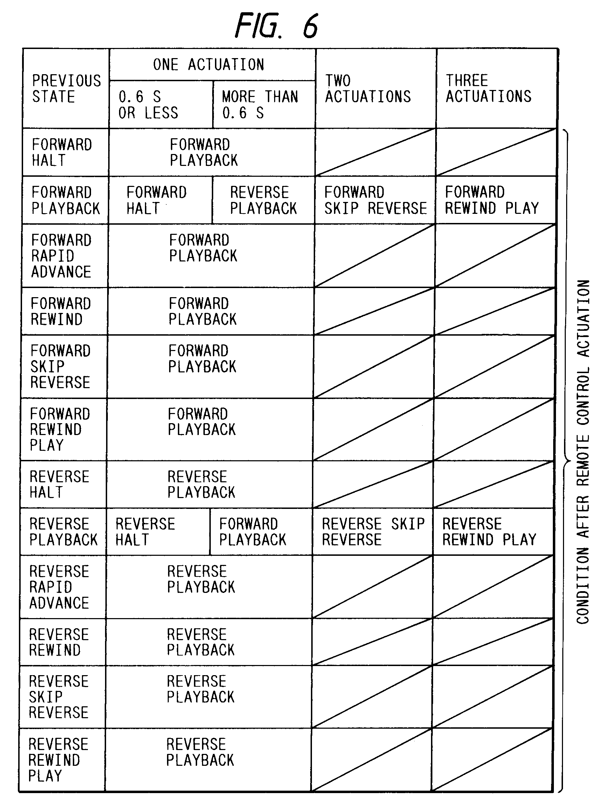

If on the other hand while the tape recorder is operating in the forward playback condition, the pushbutton switch 16 is depressed twice in succession, then that signal will be transferred to the control section 31 by the same signal path as that described above. In that case, the signal that has been sent to the control section 31 will be identified as designating that the mode is to be changed to the "(forward) fast forward" mode. In that way, the control section 31 identifies each of various combinations of actuations of the pushbutton switch 16 as corresponding command signals requesting a change in the operating condition of the tape recorder, as shown in the appended table of Fig. 6.

In that table, the designation "Skip reverse" signifies that rapid advance operation is executed until the end of the tape side that is currently being played, then the tape mechanism is changed over to the inverted condition, and playback of the opposite side of the tape begins.

Also in that table, the designation "Rewind play" signifies that the tape is rewound until the start of the side of the tape that is currently in the playing condition, then playback of that side of the tape is started.

It can thus be understood that various operations are executed in accordance with recognition by the control section 31 of a combination of actuations of the pushbutton switch 16. These include outputting of display command signals for the liquid crystal display from from the display command signal output circuit 37, generation of "beep" audio tones by the switch actuation confirmation signal generating circuit 30, generation of signals for tape drive operations etc. by the control circuit 42, controlling generation of audible "beep" tones by the earphones 21, and controlling the operation of the tape mechanism, via the control circuit 42.

The changeover switch 17 is selectively set to one of two possible positions, designated as ON and OFF in Fig. 2, for determining the tone quality of the playback signal. The line 20b is connected via a resistor 48 to the 3 V supply voltage, via a resistor 34 to the "CE" output terminal of the control section 32, and via a resistor 33 to the ON terminal of the changeover switch 17. In the state shown in Fig. 4, the values of the resistors 48 and 34 are such that the line 20b is held at 1.2 V (other than when a 3 V power supply pulse is generated on that line as described hereinabove). If the changeover switch 17 is changed from the OFF state shown in Fig. 4, to the ON state, then the resistors 33 and 34 become connected in parallel, so that the DC voltage that is applied to the connecting lead 20b is changed from 1.2 V to 0.3 V. That change is detected by the voltage detection circuit 41. The frequency compensation circuit 28 is thereby controlled to change the tone quality, i.e. to change the frequency characteristics of the stereo audio system. At the same time, that change in condition of switch 17 results in a change in the voltage applied to the "ASC in" input of the control section 32, whereby control signals are supplied from the control section 32 to the display section 18 to produce an indication of the new frequency compensation condition. Conversely if the changeover switch 17 is changed from the OFF state back to the condition shown in Fig. 4, then in a similar way, the DC voltage level applied to the connecting lead 20b will be changed from 0.3 to 1.2 V, and so the original audio frequency compensation condition will be restored.

The relationship between the frequency compensation changeover conditions and the pulse voltage supply described above is shown in Fig. 5. For example as shown in diagram (a) of Fig. 5, the DC base voltage of the connecting lead 20b is 1.2 V (i.e. with the changeover switch 17 in the OFF state) while in diagram (b) the connecting lead 20b is at the 0.3 V level (i.e. with the changeover switch 17 in the ON state). In each case, whenever a negative-going signal pulse appears on the connecting lead 20a, the connecting lead 20b goes to the 3 V level, so that power is continuously supplied to the liquid crystal display section 18 as described hereinabove.

In that way a first type of information, consisting in this embodiment of negative-going pulses resulting from predetermined combinations of actuations of the pushbutton switch 16 and constituting requests for changing the operating condition of the tape recorder, are transferred via the connecting lead 20a from the remote control actuator 15 to the main unit 11. A second type of information, consisting of predetermined combinations of negative-going pulses representing operating condition display command signals, are are transferred via the connecting lead 20a from the main unit 11 to the remote control actuator 15. A third type of information, consisting of the DC potential of the connecting lead 20b which is selectively set to one of two DC voltage levels in accordance with a required form of audio frequency compensation, is transferred via the connecting lead 20b from the remote control actuator 15 to the main unit 11. In that way the above three types of information can be transferred between the main unit 11 and the remote control actuator 15 by using only three connecting leads, i.e. the leads 20a and 20b together with a common ground lead 20c. Moreover, in addition to the above three types of information, power to drive the liquid crystal display of the remote control actuator is also continuously transferred via these three connecting leads 20a, 20b and 20c.

It thus becomes possible to interconnect the main unit of the tape recorder and the remote control actuator by a multicore connecting cord having a total of only six connecting leads, while providing three connecting leads (as shown in Fig. 2) for the stereo audio system that are completely separate from the connecting leads (20a, 20b, 20c) that are used for the aforementioned command signal and power supply functions.

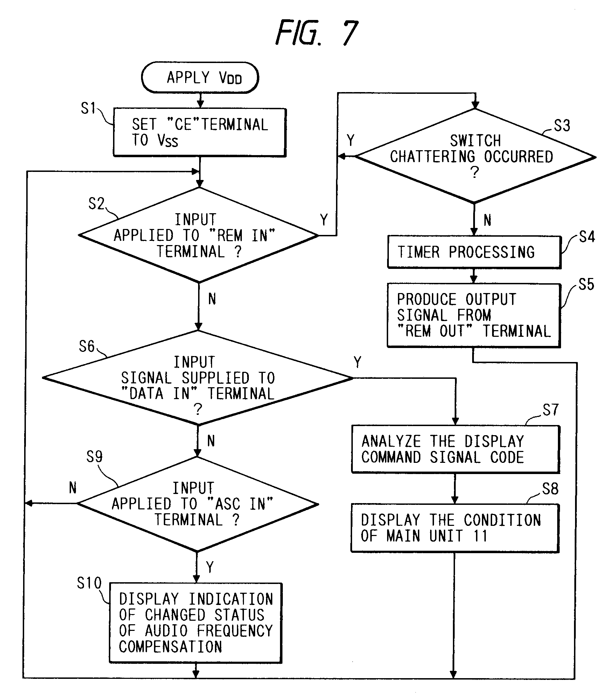

Fig. 7 is a flow diagram for describing the operation of the control section 32 in Fig. 7. Firstly, in step S1, after power has been applied to the remote control actuator 15 (by inserting the plug 19 into the jack 14), the user actuates the switch 16 once, thereby causing the transistor 35 to be set in the conducting state. The sequence of events described above then occurs, whereby the voltage of the "CE" output terminal of the control section 32 is set at 0 V.

Next in step S2, a decision is made as to whether or not the pushbutton switch 16 is being actuated, i.e. as to whether the "Rem in" input terminal is set close to 0 V. If actuation is detected, then operation advances to Step S3, in which a decision is made as to whether or not switch chattering is occurring. If a YES decision is reached, then the system waits until the switch condition has stabilized. Next in step S4, the control section 32 executes processing to generate a fixed-duration pulse in response to the actuation of the pushbutton switch 16, then in step S5 the "Rem out" terminal pulls the connecting lead 20a dawn to a level that is close to 0 V, for the duration of that pulse. Operation then returns to step S2.

If on the other hand it is judged in step S2 that the pushbutton switch 16 is not being actuated,then operation advances to step S6 in which a decision is made as to whether or not a display command signal is being supplied to the "Data in" input terminal of the control section 32. If there is a YES decision, then operation advances to step S7, in which the contents of that command signal are decoded, then in step S8 the results obtained are supplied to the liquid crystal display sec18, to control the liquid crystal display sec18 to display an indication in accordance with the contents of the display command signal. Operation then returns to step S2.

If there is a NO decision in step S6, then in step S9 a decision is made as to whether or not the 3 V potential is being applied to the input terminal "ASC in" of the control section 32. If there is a YES decision (i.e. indicating that the switch 17 has been changed from the OFF state shown in Fig. 4, in which the 0 V potential of the "CE" terminal is applied to the "ASC in" terminal, to the ON state), then operation advances to step S10, in which the control section 32 supplies control signals to the liquid crystal display sec18 for producing a display indication of the changed condition of the frequency compensation that is being provided by the compensation circuit 28. Operation then returns to step S2.

If it is found in step S9 that the ground potential is being applied to the "ASC in" terminal (i.e. switch 17 is in the OFF state), then operation returns to step S2.

Thus as will be clear from the description of the above embodiment of the present invention, only a single pushbutton switch need be provided in the remote control actuator, for selecting among a plurality of operating conditions. In addition, a display section is provided on the remote control actuator, whereby the current operating condition of the audio reproduction apparatus is displayed. Thus, as well as enabling the remote control actuator to be made more compact, the present invention enables the operating condition of the tape recorder to be visibly indicated on the remote control actuator. Hence, the invention provides greater convenience of operation.

Moreover, due to the way in which the display produced by the remote control actuator is controlled from the main unit, the number of connecting leads that are required to interconnect the main unit and the remote control actuator can be substantially reduced by comparison with the prior art, while ensuring that command signals sent from the remote control actuator to the main unit, operating condition confirmation information sent from the main unit to the remote control actuator to be displayed, and power for the display section of the remote control actuator, are each reliably transferred. Thus it becomes unnecessary to provide a power source such as a battery within the remote control actuator, so that the weight can be kept low.

**Claims**

1. A remote control apparatus for an audio reproduction apparatus, comprising:
    a remote control actuator (15) connected to a main unit of said audio reproduction apparatus via a connecting cord (20);
    a single remote control pushbutton switch (16) for controlling a plurality of operating conditions of a main unit (11) of said audio reproduction apparatus, provided in said remote control actuator; and
    display means (18) for providing a visible indication of an operating condition which is established as a result of actuations of said pushbutton switch.

2. A remote control actuator according to claim 1, wherein said main unit of said audio reproduction apparatus is provided with a signal generating circuit (37) for supplying to said remote control actuator a display command signal indicative of an operating condition to which said audio reproduction apparatus has been changed in response to said actuations of said remote control pushbutton switch.

3. A remote control actuator according to claim 1, wherein said main unit of said audio reproduction apparatus is provided with a signal generating circuit (30) for producing audio signals for providing an audible confirmation of actuations of said remote control pushbutton switch (16).

4. A remote control apparatus comprising:
    a connecting cord formed of at least three connecting leads, connected between a main unit of an audio reproduction apparatus main unit and said remote control actuator;
    a remote control pushbutton switch for controlling a plurality of operating modes of said audio reproduction apparatus main unit;
    a changeover switch operable for controlling a function which is separate from functions controlled by said pushbutton switch; and
    display means for providing a visible indication of an operating condition of said audio reproduction apparatus main unit, which has been established as a result of actuations of said pushbutton switch and a visible indication of a status of said function which is controlled by said changeover switch;
    wherein of said three connecting leads, a first one (20c) of said connecting leads is a ground lead, and second and third ones (20a, 20b) of said connecting leads serve to supply power to said remote control actuator and to transfer from said remote control actuator to said main unit first information produced by actuations of said pushbutton switch, to transfer from said main unit to said remote control actuator second information consisting of display command signals which designate indications to be produced by said display means, and to transfer from said remote control actuator to said main unit third information which indicates a status of said changeover switch.

5. A remote control apparatus according to claim 4, wherein said first connecting lead (20c) functions as a common ground lead for signals and for power supply, said second connecting lead (20a) supplies power to said remote control actuator, supplies first actuation information from said remote control actuator to said main unit and transfers said first and second information, and wherein said third connecting lead (20b) serves to transfer said third information.

6. A remote control apparatus according to claim 5, wherein said second connecting lead (20a) transfers said first and second information in said form of pulse signals, and wherein voltage power pulses at a first supply voltage level are supplied through said third connecting lead (20b) in synchronism with times at which said pulse signals are at a second supply voltage level, and comprising means for connecting said second connecting lead (20a) to supply power to said display means at times other than when said pulse signals are at said second supply voltage level and to connect said third connecting lead (20b) to supply power to said display means at times when said pulse signals are at said second supply voltage level.

7. A remote control apparatus according to claim 6 wherein said third information that is transferred via said third connecting lead (20b) consists of a DC voltage level that is attained by said third connecting lead at times other than when said pulse signals are at said second supply voltage level, said DC voltage level being determined in accordance with said status of said changeover switch (17).

8. A remote control apparatus characterized in a remote control actuator which is provided at an intermediate position on an earphone cord, configured separately from earphone signal lines.

# FIG. 1  PRIOR ART

# FIG. 2

# FIG. 3

## (a)

## (b)

FIG. 4

# FIG. 5

(a)

(b)

## FIG. 6

| PREVIOUS STATE | ONE ACTUATION | | TWO ACTUATIONS | THREE ACTUATIONS |
|---|---|---|---|---|
| | 0.6 S OR LESS | MORE THAN 0.6 S | | |
| FORWARD HALT | FORWARD PLAYBACK | | | |
| FORWARD PLAYBACK | FORWARD HALT | REVERSE PLAYBACK | FORWARD SKIP REVERSE | FORWARD REWIND PLAY |
| FORWARD RAPID ADVANCE | FORWARD PLAYBACK | | | |
| FORWARD REWIND | FORWARD PLAYBACK | | | |
| FORWARD SKIP REVERSE | FORWARD PLAYBACK | | | |
| FORWARD REWIND PLAY | FORWARD PLAYBACK | | | |
| REVERSE HALT | REVERSE PLAYBACK | | | |
| REVERSE PLAYBACK | REVERSE HALT | FORWARD PLAYBACK | REVERSE SKIP REVERSE | REVERSE REWIND PLAY |
| REVERSE RAPID ADVANCE | REVERSE PLAYBACK | | | |
| REVERSE REWIND | REVERSE PLAYBACK | | | |
| REVERSE SKIP REVERSE | REVERSE PLAYBACK | | | |
| REVERSE REWIND PLAY | REVERSE PLAYBACK | | | |

CONDITION AFTER REMOTE CONTROL ACTUATION

16

# FIG. 7